# EUROPÄISCHE PATENTSCHRIFT

(11) **EP 0 344 398 B1**
(45) Veröffentlichungstag und Bekanntmachung des Hinweises auf die Patenterteilung: **27.07.1994**
(21) Anmeldenummer: 89100846.8
(22) Anmeldetag: 19.01.1989
(51) Int. Cl.: G11B 7/24

(54) **Optischer Aufzeichnungsträger**
Optical recording carrier
Support d'enregistrement optique

(30) Priorität: 03.06.1988 DE 3818934
(43) Veröffentlichungstag der Anmeldung: 06.12.1989
(73) Patentinhaber: LEYBOLD AKTIENGESELLSCHAFT, D-63450 Hanau (DE)
(72) Erfinder: Häusler, Alfons, D-6053 Obertshausen (DE); Ludwig, Rainer, Dr., D-8757 Karlstein-Dettingen (DE); Geisler, Michael, Dr., D-6480 Wächtersbach (DE); Jung, Michael, D-8756 Kahl/Main (DE)

(56) Entgegenhaltungen:
- EP-A- 0 086 009
- EP-A- 0 251 286
- US-A- 4 477 555
- PATENT ABSTRACTS OF JAPAN, Bd. 11, Nr. 13 (C-397)(2460) 14.Januar 1987;& JP-A-61 190033

## Beschreibung

Die Erfindung betrifft einen optischen Aufzeichnungsträger, insbesondere eine audio, video oder ROM compact disc, bestehend aus einem Substrat aus einem durchscheinenden Werkstoff, beispielsweise einem Kunststoff, mit in das Substrat eingeformten, beispielsweise eingeprägten Vertiefungen, sogenannten pits und mit einer auf der einen Oberfläche des Substrats festhaftenden, im Vakuum aufgebrachten, das Licht reflektierenden, die pits überziehenden Schicht aus einem korrosionsresistenten Material.

Es ist ein optischer Aufzeichnungsträger bekannt (US 4.241.355), bei dem ein Substrat aus durchscheinendem Glas vorgesehen ist, das einseitig mit einer ersten, das Licht reflektierenden Schicht, beispielsweise aus Gold überzogen ist, auf die eine zweite Schicht aus einer das Licht absorbierenden Farbe, z. B. aus einem Phthalocyaninfarbstoff aufgebracht ist. Mit Hilfe eines Laser-Strahls kann die lichtabsorbierende Schicht örtlich verdampft werden, so daß Aussparungen oder pits entstehen, durch die ein Lichtstrahl auf die lichtreflektierende Schicht fallen kann. Mit einer geeigneten Anordnung, Anzahl und Größe von pits stellt das so beschichtete Substrat einen sehr leistungsfähigen Aufzeichnungsträger dar. Dieser bekannte Aufzeichnungsträger hat jedoch insbesondere den Nachteil, daß die aufgetragenen Schichten außerordentlich empfindlich gegen mechanische Beschädigungen sind. Außerdem erfordert dieses bekannte Herstellungsverfahren einen sehr langwierigen und aufwendigen Herstellungsprozeß der deshalb auch kostenintensiv ist.

Durch die (EP 0.089,009), die den nächsten Stand der Technik beschreißt, ist es weiterhin bekannt auf ein Kunststoff-Substrat eine erste Schicht aufzubringen die aus einem licht-aushärtenden Lack besteht, auf der dann eine zweite Schicht niedergeschlagen wird die aus Titan-Nitrid gebildet ist. Im gleichen Dokument wird auch ein einschichtiges System beschrieben bei dem das Titan-Nitrid unmittelbar auf das Substrat aufgesputtert wird. In beiden Fällen handelt es sich um eine Verbindung der Stickstoffe mit dem elektropositiven Metall Titan.

Ebenfalls zu nennen ist ein optischer Aufzeichnungsträger aus PMMA mit einer aufgedampften Ni-Cr-Schicht als eine das Licht reflektierende Schicht (EP-A-0.251.286). Diese dünne Ni-Cr-Schicht ist eingebettet in ein Schichtpaket bestehend aus einer Abstandsschicht aus SiO₂, Al₂O₃ oder ZnS, aus einer weiteren aufnahmefähigen Schicht aus Te oder Se und einer Schutzschicht aus SiO₂, Al₂O₃ oder ZnS. Aufgedampfte Schichten sind jedoch nur von begrenzter Homogenität und Dichte, so daß sich beispielsweise eine aufgedampfte Ni-Cr-Schicht nur bedingt als Korrosionsschutzschicht eignet.

Weiterhin ist allgemein die compact disc bekannt, deren kreisscheibenförmiges Substrat aus durchscheinendem Kunststoff besteht, wobei die pits in die Oberfläche der Scheibe eingeprägt, eingegossen oder eingeformt sind, indem der granulierte Kunststoff in eine Form gepreßt wird, deren eine Seitenwand eine Masterplatte bildet. Die so mit pits versehenen Kunststoffscheiben werden mit einer Schicht aus Reinaluminium bedampft, wobei die Aluminiumschicht wiederum mit einem Schutzlack überzogen wird, um dem Aufzeichnungsträger die notwendige Unempfindlichkeit und Korrosionsfestigkeit zu geben. Auch diese bekannte compact disc ist teuer in der Herstellung, insbesondere da das Lackieren der Metallschicht zeitaufwendig ist und mit extremer Sorgfalt ausgeführt werden muß.

Schließlich erzeugen Lackieranlagen vergleichsweise viel Stäube und auch chemische Verunreinigungen, die den Hochvakuumprozeß stören; und haben auch einen großen Platzbedarf der wiederum die Herstellkosten beeinflußt.

Der Erfindung liegt deshalb die Aufgabe zugrunde, einen sehr preiswerten Aufzeichnungsträger zu schaffen, der ohne eine Farbschicht oder ohne einen Schutzlack auskommt.

Dies Aufgabe wird erfindungsgemäß dadurch gelöst, daß die korrosionsresistente Schicht aus einer Vereinigung von Metallen der Gruppen 4N, 5N, 6N, 7N oder 8N des Periodischen Systems der Elemente gebildet ist und mit Hilfe der Kathodenzerstäubung als einzige Schicht auf das Substrat aufgebracht ist.

Die im Vakuum aufgestäubte (gesputterte) Schicht hat in jedem Falle den Vorteil außerordentlich widerstandsfähig gegen mechanische Beschädigung zu sein; darüberhinaus ist sie sehr korrosionsfest und erspart so den zeitaufwendigen und besondere Bearbeitungsräume erfordernden Farbauftrag.

Die Erfindung läßt die verschiedensten Ausführungsmöglichkeiten zu; eine davon ist in den anhängenden Zeichnungen rein schematisch näher beschrieben und zwar zeigen:
- Fig. 1: den Teilschnitt quer durch eine compact disc herkömmlicher Ausführung, wobei jedoch die Darstellung, der besseren Anschaulichkeit wegen, nicht maßstabsgerecht ist und
- Fig. 2: den Teilschnitt quer durch eine compact disc nach der Erfindung, wobei die Größenverhältnisse denjenigen der compact disc nach fig. 1 angepaßt sind.

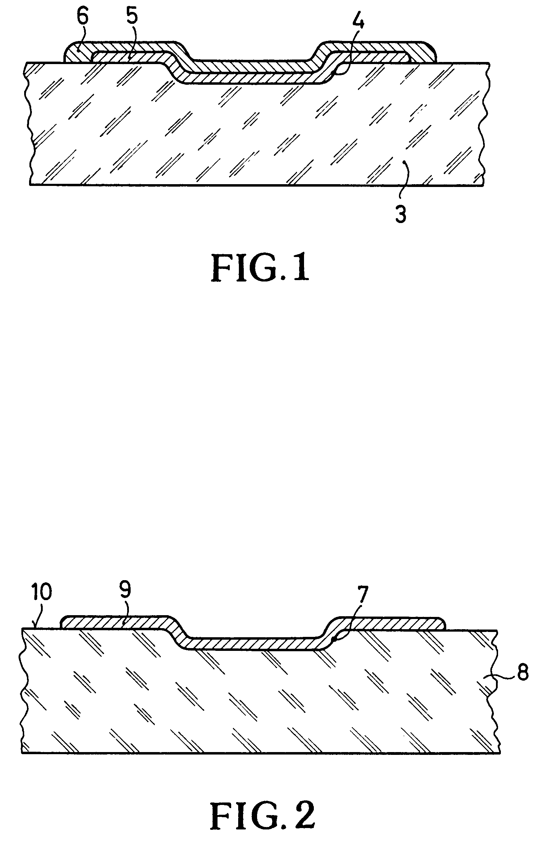

Die herkömmlichen compact disc gemäß Fig. 1 besteht aus einem scheibenförmigen Substrat 3 aus druchscheinendem Kunststoff, beispielswise einem Polycarbonat, aud deren einer Seite Vertiefungen, sogenannte pits 4 eingeprägt, eingeschnitten oder eingegossen sind. Die mit pits 4 versehene Oberfläce des Substrats 3 ist, zumindest im Bereich der pits 4 mit einer Schicht 5 aus Reinaluminium bedampft, wobei diese Schicht 5 anschließend mit einer Schutzlackschicht 6 überzogen ist, die eine Beschädigung oder ein Korrodieren der Aluminiumschicht verhindern soll.

Auf das rasch rotierende scheibenförmige Substrat 3 wird von unten her ein Lichtstrahl gerichtet, der die Scheibe 3 durchdringt und dann von der Metallschicht 5 reflektiert wird, wobei der reflektierte Lichtstrahl von einem unterhalb der Scheibe angeordneten Sensor aufgefangen und zu einem elektrischen Signal verarbeitet wird; ein Verfahren, das allgemein bekannt ist und hier nicht weiter erörtert werden soll.

Bei der erfindungsgemäßen Ausführungsform nach Fig. 2 ist das mit Grübchen oder pits 7 versehen Substrat 8 mit einer Schicht 9 versehen, die hochreflektierend, kratzfest, bedruckbar und nicht oxidierend ist. Diese Schicht 9 wird mittels DC-Sputtertechnik aufgebracht. Als Material kommen Metalle und Metallverbindungen der Gruppen 4N, 5N, 6N, 7N und 8N des Periodensystems der Elemente in Frage, soweit sie die genannten Eigenschaften aufweisen, z. B. Nickel-Chrom.

Der Vorteil der in Fig. 2 gezeigten compact disc besteht insbesondere in einer vereinfachten und verbilligten Herstellung, da keine Lackieranlage mehr benötigt wird. Darüberhinaus kann die compact disc auf jeder vorhandenen Sputteranlage durch bloße Verwendung, beispielsweise eines Nickel-Chrom-Targets hergestellt werden.

## Patentansprüche

1. Optischer Aufzeichungsträger, insbesondere audio, video oder ROM compact disc, bestehend aus einem Substrat (8) aus einem durchscheinenden Werkstoff beispielsweise einem Kunststoff mit in das Substrat (8) eingeformten, beispielsweise eingeprägten Vertiefungen, sogenannten pits (7) und mit einer auf der Oberfläche (10) des Substrats (8) festhaftenden im Vakuum aufgebrachten, das Licht reflektierenden, die pits (7) überziehenden Schicht (9) aus einem korrosionsresistente Material, **dadurch gekennzeichnet**, daß die korrosionsresistente Schicht (9) aus einer Vereinigung von Metallen der Gruppen 4N, 5N, 6N, 7N oder 8N des Periodischen Systems der Elemente gebildet ist und mit Hilfe der Kathodenzerstäubung als einzige Schicht auf das Substrat (8) aufgebracht ist.

## Claims

1. Optical recording carrier, in particular audio, video or ROM compact disc, comprising a substrate (8) made of a transparent material, for example, a plastics material and having recesses, so-called pits (7), formed, for example impressed, in the substrate (8) and having a vacuum-deposited, light-reflecting layer (9) which adheres firmly to the surface (10) of the substrate (8), covers the pits (7) and is made of a corrosion-resistant material, characterized in that the corrosion-resistant layer (9) is formed from a combination of metals of groups IVA, VA, VIA, VIIA or VIIIA of the periodic system of elements and is deposited on the substrate (8) as sole layer by means of cathode sputtering.

## Revendications

1. Support d'enregistrement optique, en particulier disque compact audio, vidéo ou ROM (mémoire morte), comprenant un substrat (8) fait d'une matière transparente, par exemple d'une matière plastique, dans lequel sont formés, par pressage par exemple, des creux appelés cuvettes (7), ainsi qu'une couche (9) recouvrant les cuvettes (7), faite d'une matière qui résiste à la corrosion, adhérant fermement à la surface (10) du substrat (8), appliquée sous vide et réfléchissant la lumière, caractérisé en ce que la couche (9) résistante à la corrosion est formée d'une combinaison de métaux des groupes 4N, 5N, 6N, 7N ou 8N de la classification périodique des éléments et est appliquée à l'aide de la pulvérisation cathodique en tant que seule couche sur le substrat (8).
